# EUROPÄISCHE PATENTSCHRIFT

(11) **EP 2 478 529 B1**
(45) Veröffentlichungstag und Bekanntmachung des Hinweises auf die Patenterteilung: **19.06.2019**
(21) Anmeldenummer: 10736682.5
(22) Anmeldetag: 21.07.2010
(51) Int. Cl.: H01F 5/02, H01F 7/08, F16K 31/06

(54) **MAGNETBAUGRUPPE FÜR EIN MAGNETVENTIL UND KORRESPONDIERENDES MAGNETVENTIL**
MAGNET ASSEMBLY FOR A SOLENOID VALVE AND CORRESPONDING SOLENOID VALVE
MODULE ÉLECTROMAGNÉTIQUE POUR ÉLECTROVANNE, ET ÉLECTROVANNE CORRESPONDANTE

(30) Priorität: 18.09.2009 DE 102009029565
(43) Veröffentlichungstag der Anmeldung: 25.07.2012
(73) Patentinhaber: Robert Bosch GmbH, 70442 Stuttgart (DE)
(72) Erfinder: PIC, Jean-Guillaume, F-G6V 8M1 Levis Quebec (FR); HAAS, Martin, 71720 Oberstenfeld (DE); MAILAENDER, Wolfgang, 71282 Hemmingen (DE)
(86) Internationale Anmeldenummer: PCT/EP2010/060563
(87) Internationale Veröffentlichungsnummer: WO 2011/032755

(56) Entgegenhaltungen:
- DE-A1- 4 416 858
- DE-A1-102006 047 921
- US-A- 4 509 716
- US-B1- 6 498 558

## Beschreibung

### Stand der Technik

Die Erfindung betrifft eine Magnetbaugruppe für ein Magnetventil nach der Gattung des unabhängigen Patentanspruchs 1 und ein zugehöriges Magnetventil mit einer solchen Magnetbaugruppe.

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, umfasst eine Ventilpatrone und eine Magnetbaugruppe.

In der Offenlegungsschrift DE 10 2006 047 921 A1 wird als Stand der Technik ein Magnetventil, insbesondere für ein Hydraulikaggregat, mit einer Magnetbaugruppe und einer Ventilpatrone beschrieben. Das beschriebene herkömmliche Magnetventil umfasst die Magnetbaugruppe zur Erzeugung eines Magnetflusses, welche einen tiefgezogenen runden Gehäusemantel als Eisenkreisoberteil, eine gestanzte Abdeckscheibe als Eisenkreisunterteil und einen mit einer Spulenwicklung bewickelten Wicklungsträger umfasst, und die Ventilpatrone, welche ein Schließelement mit Dichtelement und einen Ventilsitz umfasst. Die auf den Wicklungsträger gewickelte Spulenwicklung bildet eine elektrische Spule, die über elektrische Anschlüsse ansteuerbar ist und den Magnetfluss im Eisenkreis erzeugt. Durch Bestromung der Spulenwicklung über die elektrischen Anschlüsse und den dadurch erzeugten Magnetfluss wird die Kraft zum Betätigung und/oder Steuern eine Fluidflusses zwischen einer Einlassöffnung und einer Auslassöffnung der Ventilpatrone durch das Schließelement und den korrespondierenden Ventilsitz eingestellt. Bei der Herstellung der Magnetbaugruppe wird zur Verbindung des Eisenkreisoberteils und des Eisenkreisunterteils die Abdeckscheibe in den rohrähnlichen Gehäusemantel eingepresst. Der Wicklungsträger wird durch an einem unteren Flansch angeordnete Abstandsnoppen in einer axialen Lage gehalten. Zudem dienen die Abstandsnoppen als Toleranzausgleich zwischen dem aus Eisenkreisoberteil und Eisenkreisunterteil gebildeten Eisenkreis und dem Wicklungsträger. Der Toleranzausgleich wird über das Verpressen der Abstandsnoppen beim Eindrücken der Abdeckscheibe in den Gehäusemantel erreicht. Zwischen dem Wicklungsträger und der Abdeckscheibe bleibt, je nach Toleranz, ein unterschiedlich großer Luftspalt. Zusätzlich dienen die Abstandsnoppen zur Fixierung und zum Ausrichten des Wicklungsträgers beim Bewickeln auf einem nicht dargestellten Wickeldorn.

In der Patentschrift US 6,498,558 B1 wird ein Magnetventil für ein Fahrzeugbremssystem beschrieben. Das beschriebene Magnetventil umfasst eine Magnetbaugruppe mit einem Gehäuse, welches einen Gehäusemantel als Eisenkreisoberteil und ein in den Gehäusemantel eingepresste Abdeckscheibe als Eisenkreisunterteil umfasst, und einem innerhalb des Gehäuses angeordneten Spulenkörper, welcher einen mit einer Spulenwicklung bewickelten Wicklungsträger umfasst. Der Wicklungsträger liegt über eine Grenzfläche eines unteren Flansches im Wesentlichen spaltfrei an einer Grenzfläche der eingepressten Abdeckscheibe an.

In der US 4,509,716 A wird ein Magnetventil mit einer gattungsgemäßen Magnetbaugruppe gemäß dem Oberbegriff des Anspruchs 1 beschrieben. Die Magnetbaugruppe umfasst ein Gehäuse, welches einen Gehäusemantel als Eisenkreisoberteil und eine in den Gehäusemantel eingepresste Abdeckscheibe als Eisenkreisunterteil umfasst, und einen innerhalb des Gehäuses angeordneten Spulenkörper, welcher einen mit einer Spulenwicklung bewickelten Wicklungsträger umfasst. Hierbei passt ein oberer Teil des Spulenkörpers als Toleranzausgleichsmittel die Länge des Wicklungsträgers an die Länge des Gehäuses an, wenn die Abdeckscheibe einen Druck auf eine Oberfläche eines unteren Flansches des Wicklungsträgers ausübt. Dadurch ist der Wicklungsträger über den unteren Flansch so gegen die eingepresste Abdeckscheibe gedrückt, dass eine Grenzfläche des unteren Flansches im Wesentlichen spaltfrei an einer Grenzfläche der Abdeckscheibe anliegt, um einen möglichst geringen thermischen Übergangswiderstand auszubilden.

### Offenbarung der Erfindung

Die erfindungsgemäße Magnetbaugruppe mit den Merkmalen des unabhängigen Patentanspruchs 1 hat demgegenüber den Vorteil, dass an einem Spulenkörper angeordnete Toleranzausgleichsmittel so ausgeführt sind, dass ein Winklungsträger über einen unteren Flansch so gegen eine in einen Gehäusemantel eingepresste Abdeckscheibe gedrückt ist, dass eine Grenzfläche des unteren Flansches im Wesentlichen spaltfrei an einer Grenzfläche der Abdeckscheibe anliegt, um einen möglichst geringen thermischen Übergangswiderstand auszubilden. Dadurch ist es in vorteilhafter Weise möglich, den Wicklungsträger flächig an die Abdeckscheibe anzulegen, so dass eine bessere und damit gleichmäßigere Wärmeableitung der Spulenwicklung über die Abdeckscheibe zu einem anschließenden Hydraulikblock bzw. Pumpengehäuse erfolgen kann. Durch die verbesserte Wärmeableitung kann die Magnetbaugruppe in vorteilhafter Weise länger beschaltet werden, bevor die obere Grenztemperatur des Spulenkörpers, insbesondere des Wicklungsträgerwerkstoffs, erreicht ist. Gegenüber der Magnetbaugruppe des herkömmlichen Magnetventils ist im Wesentlichen unter Beibehaltung der äußeren Form und der Komponenten der Magnetbaugruppe jetzt zwischen Wicklungsträger und Scheibe so gut wie kein Luftspalt mehr vorhanden. Dadurch ergibt sich in vorteilhafter Weise zum einen ein geringerer thermischer Übergangswiderstand zwischen dem Wicklungsträger und der Abdeckscheibe und somit eine gute Wärmableitung von der Spulenwicklung zur Umgebung, d.h. zum Hydraulikblock bzw. Pumpengehäuse, zum anderen wird in vorteilhafter Weise auch die Streuung des thermischen Übergangswiderstandes reduziert. Der geringere thermische Übergangswiderstand erlaubt eine längere und/oder höhere Bestromung der Spulenwicklung. Die reduzierte Streuung des thermischen Übergangswiderstands erlaubt bei einem Einsatz von Spulentemperaturmodellen eine genauere Vorhersage des zu erwartenden Temperaturverlaufs und der Maximaltemperatur.

Hierbei sind die Toleranzausgleichsmittel als mindestens eine Lasche ausgeführt, welche als seitliche Stufe an den unteren Flansch des Wicklungsträgers angeformt ist. Auch diese Ausführungsform der Toleranzausgleichsmittel sorgt in vorteilhafter Weise dafür, dass der Spulenkörper im Wesentlichen spaltfrei auf der Abdeckscheibe aufliegt. Hierbei liegt die mindestens eine Lasche nach dem Einpressen der Abdeckscheibe in den Gehäusemantel an einer korrespondierenden Aussparung im Gehäusemantel an, wobei der Toleranzausgleich über die Elastizität der mindestens einen Lasche erfolgt. Das bedeutet, dass die an der korrespondierenden Aussparung im Gehäusemantel anliegende mindestens eine Lasche in vorteilhafter Weise gespannt ist, so dass der Spulenkörper auf die Abdeckscheibe gedrückt wird.

Die erfindungsgemäße Magnetbaugruppe kann durch ihre im Wesentlichen unveränderte äußere Form für beliebige Magnetventile im Fahrzeug eingesetzt werden. Das erfindungsgemäße Magnetventil kann beispielsweise in Fluidbaugruppen verwendet werden, die in einem Antiblockiersystem (ABS) oder einem Antriebsschlupfregelsystem (ASR-System) oder einem elektronischen Stabilitätsprogrammsystem (ESP-System) eingesetzt werden.

Durch die in den abhängigen Ansprüchen aufgeführten Maßnahmen und Weiterbildungen sind vorteilhafte Verbesserungen der im unabhängigen Patentanspruch 1 angegebenen Magnetbaugruppe möglich.

Vorteilhafte, nachfolgend beschriebene Ausführungsformen der Erfindung sind in den Zeichnungen dargestellt. In den Zeichnungen bezeichnen gleiche Bezugszeichen Elemente bzw. Komponenten, welche gleiche bzw. analoge Funktionen ausführen.

### Kurze Beschreibung der Zeichnungen

Fig. 1 zeigt eine schematische Schnittdarstellung einer konventionellen Magnetbaugruppe.
Fig. 2 zeigt eine schematische Schnittdarstellung eines Ausführungsbeispiels einer erfindungsgemäßen Magnetbaugruppe.

### Ausführungsformen der Erfindung

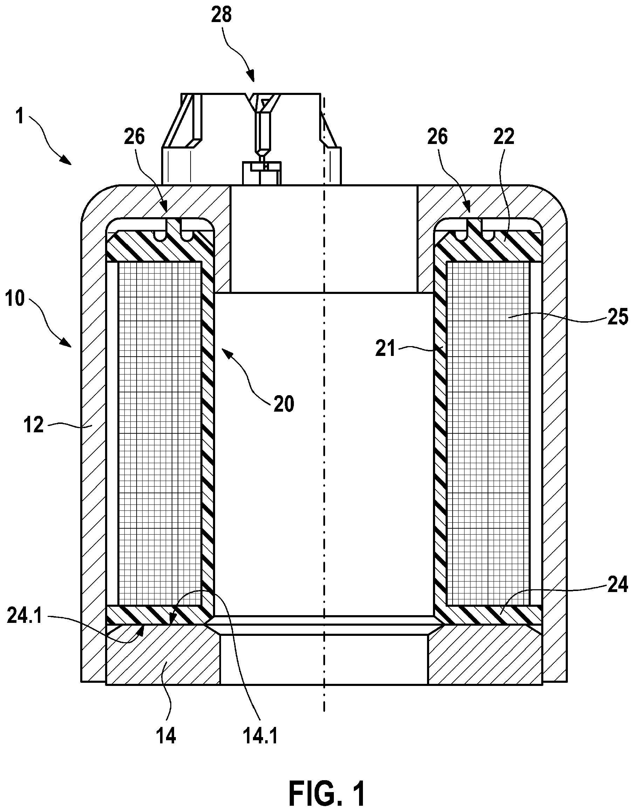

Wie aus Fig. 1 ersichtlich ist, umfasst ein erstes Ausführungsbeispiel einer Magnetbaugruppe 1 für ein Magnetventil ein Gehäuse 10, welches einen Gehäusemantel 12 als Eisenkreisoberteil und eine in den Gehäusemantel 12 eingepresste Abdeckscheibe 14 als Eisenkreisunterteil umfasst, und einen innerhalb des Gehäuses 10 angeordneten Spulenkörper 20, welcher einen mit einer Spulenwicklung 25 bewickelten Wicklungsträger 21 mit einem oberen Flansch 22 und einem unteren Flansch 24 umfasst. Analog zum Stand der Technik bildet die auf den Wicklungsträger 21 gewickelte Spulenwicklung 25 eine elektrische Spule, die über elektrische Anschlüsse 28 ansteuerbar ist und den Magnetfluss im Eisenkreis erzeugt. Zudem sind am Spulenkörper 20 Toleranzausgleichsmittel 26 angeordnet, die erfindungsgemäß so ausgeführt sind, dass der Winklungsträger 21 über den unteren Flansch 24 so gegen die eingepresste Abdeckscheibe 14 gedrückt ist, dass eine Grenzfläche 24.1 des unteren Flansches 24 im Wesentlichen spaltfrei an einer Grenzfläche 14.1 der Abdeckscheibe 14 anliegt, um einen möglichst geringen thermischen Übergangswiderstand auszubilden. Im dargestellten ersten Ausführungsbeispiel sind die Toleranzausgleichsmittel als Abstandsnoppen 26 ausgeführt, welche zwischen dem oberen Flansch 22 und dem Gehäusemantel 12 angeordnet sind, und dadurch ermöglichen, dass der Spulenkörper 20 im Wesentlichen spaltfrei auf der Abdeckscheibe 14 aufliegt.

Wie aus Fig. 1 weiter ersichtlich ist, sind die Abstandsnoppen nach dem Einpressen der Abdeckscheibe in den Gehäusemantel 12 verformt und fixieren den Spulenkörper 20 zwischen dem Gehäusemantel 12 und der Abdeckscheibe 14. Durch die oben liegenden Abstandsnoppen 26 ist es möglich den Wicklungsträger 21 mit seinem unteren Flansch 24 flächig an der Abdeckscheibe 14 anzulegen, so dass eine bessere und damit gleichmäßigere Wärmeableitung von der Spulenwicklung 25 über die Abdeckscheibe 14 zum anschließenden nicht dargestellten Hydraulikblock bzw. Pumpengehäuse erfolgen kann. Durch die verbesserte Wärmeableitung kann die Magnetgruppe 1 länger beschaltet werden, bevor die obere Grenztemperatur der Spulenwicklung 25, insbesondere des Wicklungsträgerwerkstoffs, erreicht ist.

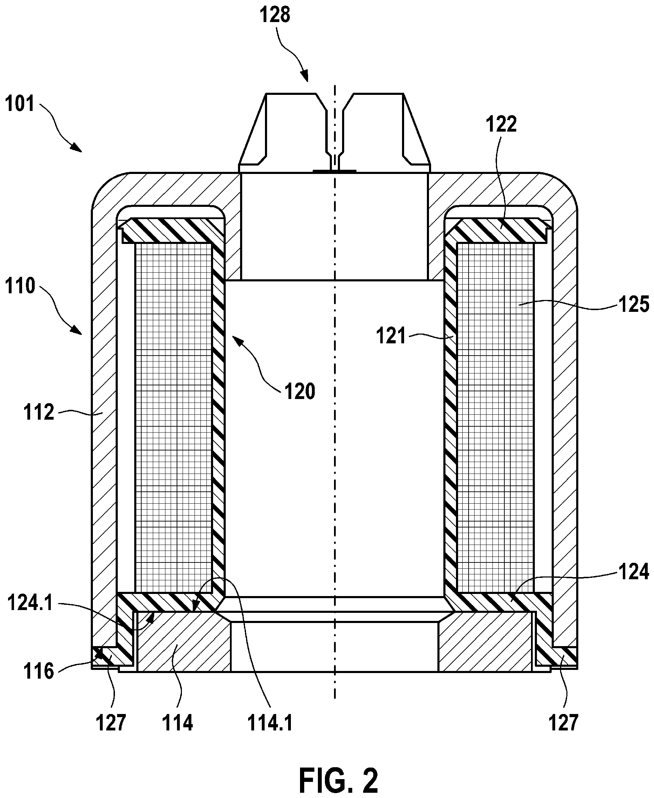

Wie aus Fig. 2 ersichtlich ist, umfasst ein Ausführungsbeispiel einer erfindungsgemäßen Magnetbaugruppe 101 für ein Magnetventil analog zum ersten Ausführungsbeispiel ein Gehäuse 110, welches einen Gehäusemantel 112 als Eisenkreisoberteil und eine in den Gehäusemantel 112 eingepresste Abdeckscheibe 114 als Eisenkreisunterteil umfasst, und einen innerhalb des Gehäuses 110 angeordneten Spulenkörper 120, welcher einen mit einer Spulenwicklung 125 bewickelten Wicklungsträger 121 mit einem oberen Flansch 122 und einem unteren Flansch 124 umfasst. Analog zum Stand der Technik bildet die auf den Wicklungsträger 121 gewickelte Spulenwicklung 125 eine elektrische Spule, die über elektrische Anschlüsse 128 ansteuerbar ist und den Magnetfluss im Eisenkreis erzeugt. Zudem sind am Spulenkörper 120 Toleranzausgleichsmittel 127 angeordnet, die erfindungsgemäß so ausgeführt sind, dass der Winklungsträger 121 über den unteren Flansch 124 so gegen die eingepresste Abdeckscheibe 114 gedrückt ist, dass eine Grenzfläche 124.1 des unteren Flansches 124 im Wesentlichen spaltfrei an einer Grenzfläche 114.1 der Abdeckscheibe 114 anliegt, um einen möglichst geringen thermischen Übergangswiderstand auszubilden. Im dargestellten zweiten Ausführungsbeispiel sind die Toleranzausgleichsmittel als Laschen 127 ausgeführt, welche als seitliche Stufen an den unteren Flansch 124 des Wicklungsträgers 121 angeformt sind und nach dem Einpressen der Abdeckscheibe 114 in den Gehäusemantel 112 jeweils an einer Aussparung 116 im Gehäusemantel 112 anliegen. Bei der Ausführung als Laschen 127 erfolgt der Tolerantzausgleich über die Elastizität der mindestens einen Lasche 127, wobei die an Aussparungen 116 im Gehäusemantel 112 anliegenden Laschen 127 so gespannt sind, dass der Spulenkörper 120 im Wesentlichen spaltfrei auf die Abdeckscheibe 114 gedrückt ist.

Durch die Laschen 127 ist es möglich den Wicklungsträger 121 mit seinem unteren Flansch 124 flächig an der Abdeckscheibe 14 anzulegen, so dass eine bessere und damit gleichmäßigere Wärmeableitung von der Spulenwicklung 125 über die Abdeckscheibe 114 zum anschließenden nicht dargestellten Hydraulikblock bzw. Pumpengehäuse erfolgen kann. Durch die verbesserte Wärmeableitung kann die erfindungsgemäße Magnetgruppe 101 länger beschaltet werden, bevor die obere Grenztemperatur der Spulenwicklung 25, insbesondere des Wicklungsträgerwerkstoffs, erreicht ist.

Die erfindungsgemäße Magnetbaugruppe 1, 101 erzeugt den erforderlichen Magnetfluss, um einen Fluiddurchfluss zwischen mindestens einer Einlassöffnung und mindestens einer Auslassöffnung des Magnetventils über mindestens einen entsprechenden Schließkörper und mindestens einen Ventilsitz einzustellen und kann in beliebigen Magnetventilen eingesetzt werden.

Ausführungsformen der vorliegenden Erfindung ermöglichen in vorteilhafter Weise, dass zwischen Wicklungsträger und Scheibe so gut wie kein Luftspalt mehr vorhanden. Dadurch ergibt sich ein geringerer thermischer Übergangswiderstand der Spulenwicklung zur Umgebung, d.h. zum Hydraulikblock bzw. Pumpengehäuse. Zudem kann auch die Streuung des thermischen Übergangswiderstandes zwischen den hergestellten Magnetbaugruppen reduziert werden. Der geringere Übergangswiderstand erlaubt eine längere und/oder höhere Bestromung der Spule, und die reduzierte Streuung erlaubt beispielsweise beim Einsatz von Spulentemperaturmodellen eine genauere Vorhersage des zu erwartenden Temperaturverlaufs und der Maximaltemperatur innerhalb der Magnetbaugruppe.

## Patentansprüche

1. Magnetbaugruppe für ein Magnetventil mit einem Gehäuse (110), welches einen Gehäusemantel (112) als Eisenkreisoberteil und eine in den Gehäusemantel (112) eingepresste Abdeckscheibe (114) als Eisenkreisunterteil umfasst, und einen innerhalb des Gehäuses (110) angeordneten Spulenkörper (120), welcher einen mit einer Spulenwicklung (125) bewickelten Wicklungsträger (121) umfasst, wobei am Spulenkörper (120) Toleranzausgleichsmittel (127) angeordnet sind, welche so ausgeführt sind, dass der Wicklungsträger (121) über einen unteren Flansch (124) so gegen die eingepresste Abdeckscheibe (114) gedrückt ist, dass eine Grenzfläche (124.1) des unteren Flansches (124) im Wesentlichen spaltfrei an einer Grenzfläche (114.1) der Abdeckscheibe (114) anliegt, um einen möglichst geringen thermischen Übergangswiderstand auszubilden, **dadurch gekennzeichnet, dass** ein Luftspalt zwischen einem oberen Flansch (122) des Spulenkörpers (120) und dem Gehäusemantel (112) vorliegt, wobei die Toleranzausgleichsmittel als mindestens eine Lasche (127) ausgeführt sind, welche als seitliche Stufe an den unteren Flansch (124) des Wicklungsträgers (121) angeformt ist, wobei die mindestens eine Lasche (127) nach dem Einpressen der Abdeckscheibe (114) in den Gehäusemantel (112) an einer Aussparung (116) im Gehäusemantel (112) anliegt und der Toleranzausgleich über die Elastizität der mindestens einen Lasche (127) erfolgt.

2. Magnetbaugruppe nach Anspruch 1, **dadurch gekennzeichnet, dass** die an einer Aussparung (116) im Gehäusemantel (112) anliegende mindestens eine Lasche (127) gespannt ist, so dass der Spulenkörper (120) auf die Abdeckscheibe (114) gedrückt ist.

3. Magnetventil, **gekennzeichnet durch** eine Magnetbaugruppe (101) nach einem der Ansprüche 1 oder 2.

## Claims

1. Magnet assembly for a solenoid valve, having a housing (110) which comprises a housing jacket (112) as the iron circuit upper part and a covering disk (114), which is pressed into the housing jacket (112), as the iron circuit lower part, and a coil former (120) which is arranged inside the housing (110) and comprises a winding support (121) which is wound with a coil winding (125), with tolerance-compensation means (127) being arranged on the coil former (120), said tolerance-compensation means being designed such that the winding support (121) is pushed against the pressed-in covering disk (114) by means of a lower flange (124) such that a boundary surface (124.1) of the lower flange (124) rests substantially without a gap against a boundary surface (114.1) of the covering disk (114) in order to form a thermal contact resistance which is as low as possible, **characterized in that** an air gap is present between an upper flange (122) of the coil former (120) and the housing jacket (112), wherein the tolerance-compensation means are designed as at least one lug (127) which is integrally formed as a lateral step on the lower flange (124) of the winding support (121), wherein the at least one lug (127) rests against a cutout (116) in the housing jacket (112) after the covering disk (114) is pressed into the housing jacket (112), with tolerance compensation being performed by virtue of the elasticity of the at least one lug (127).

2. Magnet assembly according to Claim 1, **characterized in that** the at least one lug (127) which rests against a cutout (116) in the housing jacket (112) is tensioned, and therefore the coil former (120) is pushed onto the covering disk (114).

3. Solenoid valve, **characterized by** a magnet assembly (101) according to one of Claims 1 and 2.

## Revendications

1. Module magnétique pour électrovanne, comprenant un boîtier (110) qui comprend une enveloppe de boîtier (112) en tant que partie supérieure de circuit ferromagnétique et un disque de recouvrement (114) enfoncé dans l'enveloppe de boîtier (112) en tant que partie inférieure de circuit ferromagnétique, et un corps de bobine (120) disposé à l'intérieur du boîtier (110), qui comprend un support d'enroulement (121) enroulé avec un enroulement de bobine (125), des moyens de compensation des tolérances (127) étant disposés sur le corps de bobine (120), lesquels sont réalisées de telle sorte que le support d'enroulement (121) soit pressé par le biais d'une bride inférieure (124) contre le disque de recouvrement enfoncé (114) de telle sorte qu'une surface limite (124.1) de la bride inférieure (124) s'applique essentiellement sans jeu contre une surface limite (114.1) du disque de recouvrement (114), afin d'obtenir une résistance de contact thermique aussi faible que possible, **caractérisé en ce qu'**un entrefer est présent entre une bride supérieure (122) du corps de bobine (120) et l'enveloppe de boîtier (112), les moyens de compensation des tolérances étant réalisés sous la forme d'au moins une patte (127) qui est formée en tant que gradin latéral au niveau de la bride inférieure (124) du support d'enroulement (121), l'au moins une patte (127) s'appliquant, après l'enfoncement du disque de recouvrement (114) dans l'enveloppe de boîtier (112), contre un évidement (116) dans l'enveloppe de boîtier (112) et la compensation des tolérances s'effectuant par le biais de l'élasticité de l'au moins une patte (127) .

2. Module magnétique selon la revendication 1, **caractérisé en ce que** l'au moins une patte (127) s'appliquant contre un évidement (116) dans l'enveloppe de boîtier (112) est tendue de telle sorte que le corps de bobine (120) soit pressée sur le disque de recouvrement (114).

3. Électrovanne, **caractérisée par** un module magnétique (101) selon l'une quelconque des revendications 1 et 2.
